# EUROPEAN PATENT APPLICATION

(11) **EP 2 026 611 A1**
(43) Date of publication of application: **18.02.2009**
(21) Application number: 07291015.1
(22) Date of filing: 14.08.2007
(51) Int. Cl.: H04W 4/00

(54) **Handover method and apparatus in a wireless telecommunications network**

(71) Applicant: Alcatel Lucent, 75008 Paris (FR); LUCENT TECHNOLOGIES INC., Murray Hill NJ 07974-0636 (US)
(72) Inventor: Palat, Sudeep Kumar, Swindon Wiltshire SN5 6EE (GB); Casati, Alessio, Swindon Wiltshire SN5 5BG (GB); Godin, Philippe, Viroflay 78220 (FR)
(74) Representative: Cockayne, Gillian

(57) **Abstract**

In handover in a wireless telecommunications network, dummy packets, or data packets with a last used sequence number indicator are transmitted from a source node eNB 2 to a target node 3. When the target node eNB 3 detects the information, it knows the sequence of data packets being received from the source node eNB 2 and which is the last one and its sequence number. Thus, data packets may be suitable ordered for delivery to a mobile terminal UE 1.

## Description

### FIELD OF THE INVENTION

The present invention relates to a method and apparatus for handover in a wireless telecommunications network, and more particularly, but not exclusively, to a method and apparatus implemented in accordance with the 3rd Generation Partnership Project (3GPP) evolved Universal Terrestrial Radio Access Network (E-UTRAN) and evolved Universal Terrestrial Radio Access (E-UTRA) specifications.

### BACKGROUND OF THE INVENTION

Currently, 3GPP is considering development of E-UTRA and E-UTRAN as set out in the technical specification 3GPP TS 36.300 v 8.1.0 (2007- 06), incorporated herein by way of reference, and related documents. 3GPP Long Term Evolution (LTE) aims to enhance the Universal Mobile Telecommunications System (UMTS) standard, for example, by improving efficiency and services.

In E-UTRAN, user equipment (UE) communicates with a network node, NodeB (eNB), with data being sent on radio bearers (RBs) over a radio link between them. The eNB interfaces with a Mobile Management Entity/Ssytem Architecture Evolution Gateway (MME/SAE GW) via an interface designated as S1. An E-UTRAN network includes a plurality of eNBs and MME/SAE GWs.

In LTE, all the Radio Access Network (RAN) functions are integrated in each node, eNB. Downlink user data, that is Internet Protocol (IP) packets are transmitted from the SAE GW to the eNB. As the UE is handed over from a first, source, eNB to another, target, eNB, the SAE GW is updated with the current location eNB of the UE and the SAE GW starts to send data to the target eNB.

However, to avoid data loss any data that is already buffered in the source eNB must be forwarded to the target eNB. Also, data that has been sent to the source eNB during the handover (HO) procedure, before the SAE GW is updated with the current location of the UE, is also forwarded by the source eNB to the target eNB.

To preserve the order of packets sent to the UE, the target eNB must first send data over the radio in the same order as sent by the SAE GW. That is, first data buffered by the eNB is sent to the target eNB, followed by data in transit from the SAE GW during the HO process, and only when these have all been sent can the target eNB send to the UE fresh data that it receives directly from the SAE GW.

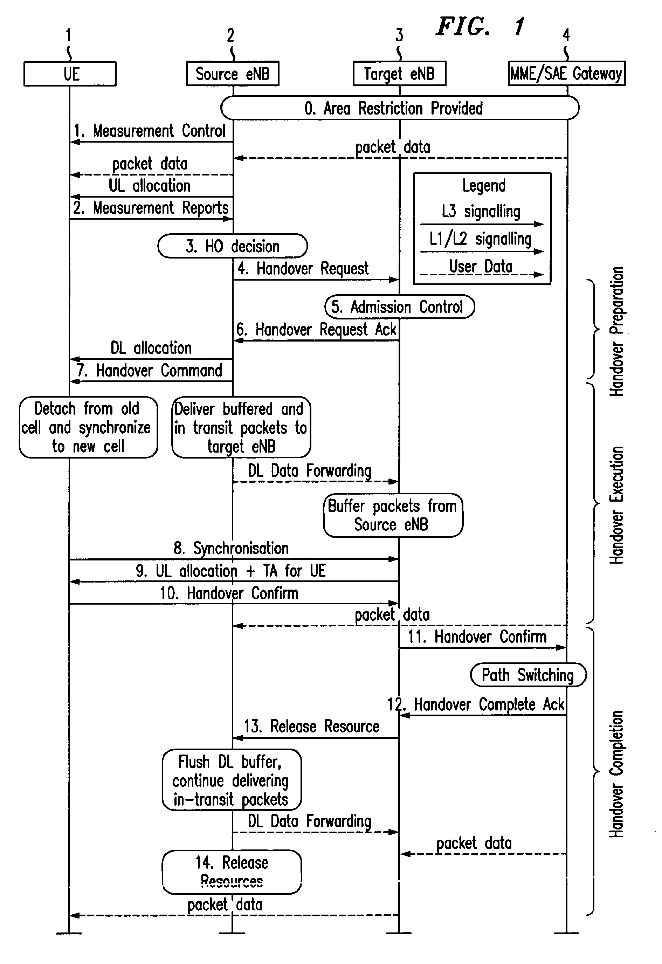

The message flow for the HO process applied to a UE 1 is shown in Figure 1 which illustrates a network including a source eNB 2, a target eNB 3 and an MME/SAE GW 4. When the source eNB 2 makes a handover decision based on measurement reports from the UE 1, it sends a Handover Request message to the target eNB 3. At the Admission Control step 5, the target eNB 3 configures the required resources and sends a Handover Request Acknowledge message to the source eNB 2. Following the handover command from the source eNB 2 to the UE 1, the UE 1 detached from the old cell and synchronises to the new cell associated with the target eNB 3. Also, data packets buffered at the source eNB 2 and any in transit are forwarded to the target eNB 3. Following the handover confirm message at step 10 from the UE 1 to the target eNB 3, a handover completion message is sent to the MME/SAE GW 4 by the target eNB 3. Data packets from the source eNB 2 continue to be delivered to the target eNB 3. The target eNB can then send fresh data arriving over S 1 from MME/SAE GW once all the forwarded data from source eNB 2 has been received by it.

All packets are numbered as they are sent to the UE. To keep continuity after the HO and to know how to re-order the packets in the right sequence and also to identify any duplicate packets, the packet sequence number must be maintained from the source to the target eNB after the handover.

It is necessary for the target eNB to know the sequence number of the packets and also the last sequence number used by the source eNB towards the UE. This is most relevant if there is no data to forward and the first packet to send to the UE on the target side is a fresh packet over the S1 interface. In this case, the target eNB needs to know what number to use for this first packet. One way that this might be achieved is to send a control message containing the last used sequence number. This would require a message format to be specified, developed and tested for this one particular case.

### BRIEF SUMMARY OF THE INVENTION

According to a first aspect of the invention, a method for handover of a mobile terminal from a source node to a target node in a wireless telecommunications network, including the steps of:
during a handover procedure, the source node forwarding any data packets to the target node which sends them to the mobile terminal;
the source node adding a last used sequence number indicator to at least one packet to indicate the sequence number of the last data packet to be delivered by the source node to the target node; and
forwarding the packet with the indicator to the target node.

By employing the invention, it is not necessary to define, develop and test a new control message to assist in correctly ordering and handling data packets during a handover procedure. The last used sequence number can be supplied to the target node as part of packet handling with minimal additional functionality needed to implement it in a network design and protocol. Advantageously, the last used sequence number indicator is included in a plurality of packets to ensure that the sequence number information reaches the target node. The indicator may be added to data packets or to dummy packets that carry no data payload. In the latter case, a dummy packet could include only header information and the last used sequence number. In one method, a mix of data and dummy packets may be used, each carrying the last used sequence number indicator. This might be advantageous, for example, where only a few data packets are required to be forwarded to the target node from the source node. The source node may generate the dummy packets were these are required.

The method arose form considering a telecommunications network in accordance with Long Term Evolution (LTE) specifications but it may also be applied to networks in accordance with other standards or specifications.

According to a second aspect of the invention, a wireless telecommunications network operates in accordance with the inventive method.

According to a third aspect of the invention, a network node comprises a generator for adding a last used sequence number indicator to at least one packet to indicate the sequence number of the last data packet to be delivered by the node to another target node during handover. Alternatively, or in addition, the network node includes a generator for generating a dummy packet having a last used sequence number indicator.

### BRIEF DESCRIPTION OF THE DRAWINGS

Some embodiments and methods in accordance with the invention are now described, by way of example only, and with reference to the accompanying drawings, in which:
Figure 1 schematically illustrates a prior art network and messaging during handover;
Figure 2 schematically illustrates a network and messaging during handover in accordance with the invention; and
Figure 3 schematically illustrates a flow diagram the operation of the network shown in Figure 2.

### DETAILED DESCRIPTION OF THE DRAWINGS

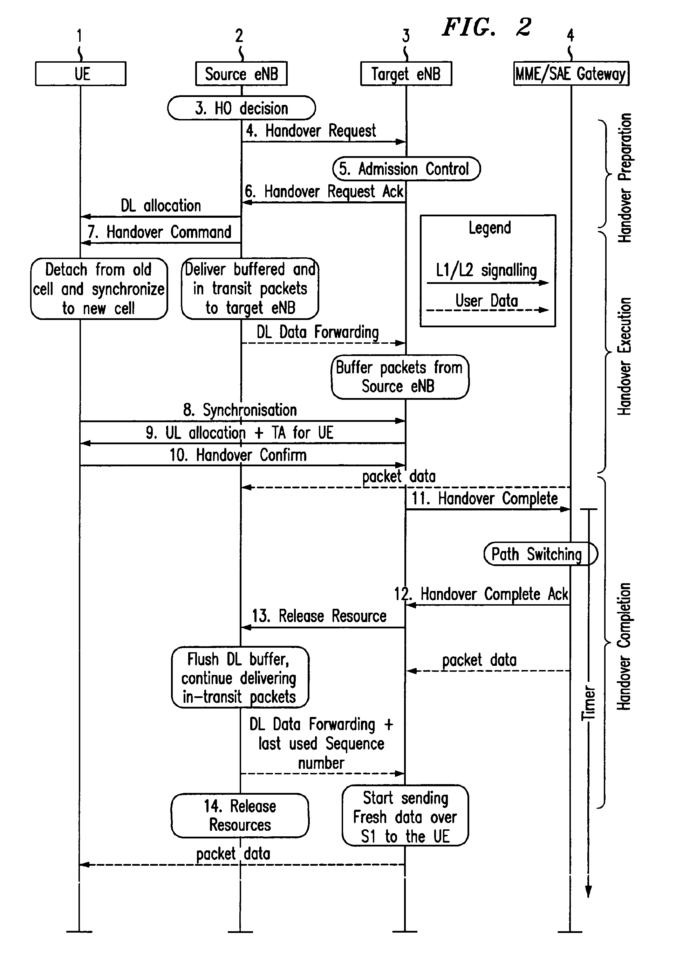

With reference to Figure 2, in an LTE telecommunications network, the handover process is similar to that shown in Figure 1 until the handover complete acknowledgement message is sent from the SAE GW 4 to the target node 3 to, as shown at step 12. The source node eNB 2 is instructed to release resources and identifies which will be the last data packet forwarded by it to the target node eNB 3 and its sequence number. The data packets are buffered at the source node eNB 2 which generates an indicator for addition to at least some of the buffered data packets. Thus, each of the packets with the indicator identifies the last sequence number used to the target node eNB 3 when it receives them, and this can be used in turn when sending the data packets to the UE 1. If there are no buffered data packets at the source node eNB 2, the indicator is added to data packets being sent to it by the SAE GW 4 over the S 1 interface. Where there are no data packets available, the source node eNB 2 uses a generator to generate a dummy packet, or packets, that include the last used sequence number.

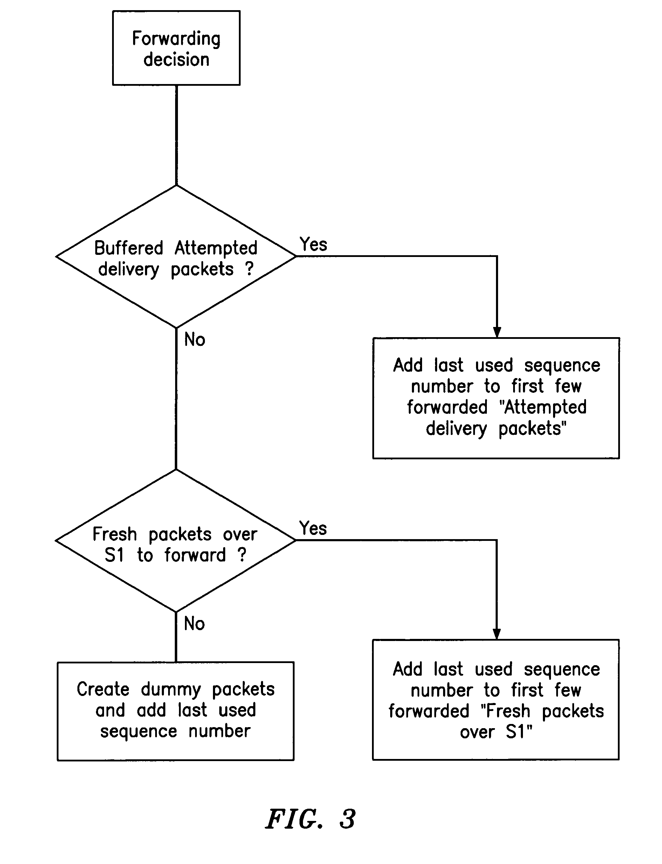

Figure 3 is an explanatory flow diagram setting out the steps carried out at the source eNB 2.

The present invention may be embodied in other specific forms and implemented in other methods without departing from its spirit or essential characteristics. The described embodiments and methods are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for handover of a mobile terminal from a source node to a target node in a wireless telecommunications network, including the steps of:
during a handover procedure, the source node forwarding any data packets to the target node which sends them to the mobile terminal;
the source node adding a last used sequence number indicator to at least one packet to indicate the sequence number of the last data packet to be delivered by the source node to the target node; and
forwarding the packet with the indicator to the target node.

2. The method as claimed in claim 1 wherein the source node adds a last used sequence number indicator to a plurality of packets.

3. The method as claimed in claim 1 or 2 wherein the last used sequence number indicator is added to a data packet or data packets.

4. The method as claimed in claim 3 wherein the indicator is added to data packets buffered at the source node before forwarding to the target node.

5. The method as claimed in claim 3 or 4 wherein the indicator is added to data packets sent from to the source node to the target node without buffering at the source node.

6. The method as claimed in claim 1 or 2 wherein the last used sequence number indicator is added to a dummy packet or dummy packets.

7. The method as claimed in any preceding claim wherein the telecommunications network is in accordance with Long Term Evolution (LTE) specifications.

8. A wireless telecommunications network operating in accordance with a method as claimed in any preceding claim.

9. A network node comprising a generator for adding a last used sequence number indicator to at least one packet to indicate the sequence number of the last data packet to be delivered by the node to another target node during handover.

10. A network node as claimed in claim 9 and including a generator for generating a dummy packet having a last used sequence number indicator.
